Europäisches Patentamt

European Patent Office

Office européen des brevets

(19)

(11) **EP 0 975 215 B1**

(12) **EUROPÄISCHE PATENTSCHRIFT**

(45) Veröffentlichungstag und Bekanntmachung des Hinweises auf die Patenterteilung:
**28.08.2002  Patentblatt 2002/35**

(51) Int Cl.⁷: **A01N 25/04**, A01N 25/08

(21) Anmeldenummer: **98920492.0**

(86) Internationale Anmeldenummer:
**PCT/EP98/01870**

(22) Anmeldetag: **31.03.1998**

(87) Internationale Veröffentlichungsnummer:
**WO 98/046075 (22.10.1998 Gazette 1998/42)**

(54) **PFLANZENSCHUTZMITTEL**

PLANT PROTECTION AGENTS

PRODUITS PHYTOSANITAIRES

(84) Benannte Vertragsstaaten:
**AT BE CH DE DK ES FI FR GB GR IE IT LI LU MC NL PT SE**

(30) Priorität: **15.04.1997  DE 19715639**

(43) Veröffentlichungstag der Anmeldung:
**02.02.2000  Patentblatt 2000/05**

(73) Patentinhaber: **Stefes Agro GmbH
D-50170 Kerpen (DE)**

(72) Erfinder:
  • **MÜLLER, Jacki
    D-50374 Erftstadt (DE)**
  • **ZÖLLKAU, Achim
    D-53359 Rheinbach (DE)**
  • **POHL, Vera
    D-50126 Bergheim (DE)**

  • **BEDNARSKA, Ewa
    D-50129 Bergheim (DE)**
  • **SÜSSMANN, Rainer
    D-38304 Wolfenbüttel (DE)**

(74) Vertreter: **Flaccus, Rolf-Dieter, Dr.
Patentanwalt
Bussardweg 10
50389 Wesseling (DE)**

(56) Entgegenhaltungen:
  **EP-A- 0 063 867          EP-A- 0 465 899
  EP-A- 0 579 052          WO-A-95/18531
  WO-A-96/03871          WO-A-97/12516**

Bemerkungen:
  Die Akte enthält technische Angaben, die nach dem Eingang der Anmeldung eingereicht wurden und die nicht in dieser Patentschrift enthalten sind.

## Beschreibung

Gegenstand der vorliegenden Erfindung sind Pflanzenschutzmittel mit blattaktiven oder systemischen Wirkstoffen, die eine Erweiterung des Wirkungsspektrums und der Wirksamkeit durch Anwendung eines Tensid-Kieselgelgemisches ermöglichen.

Pflanzenschutzmittel sind im Sprachgebrauch der vorliegenden Anmeldung anwendungsfähige Präparationen von Wirkstofen, die sich insbesondere gegen tierische, mikrobielle oder pflanzliche Schadenserreger von Nutz- oder Kulturpflanzen richten.

Der Zusatz von kolloidalen Kieselsäuren ist im Bereich der Formulierungen von Pflanzenschutzmitteln weit verbreitet und seit langem bekannt. Die Verwendung ist ausreichend in der entsprechenden Literatur beschrieben.

Die aus dem Stand der Technik bekannte Verwendung beschränkt sich auf die Verwendung der Kieselgele als sogenannte "inerte" Beistoffe in Pflanzenschutzpräparationen. So wird zum Beispiel bei Büchel "Pflanzenschutz und Schädlingsbekämpfungsmittel", 1977, Seite 198, die Anwendung von Kieselgelen als Hilfsmittel zur Herstellung von dispergierbaren Suspensionen beschrieben. Tadros beschreibt in "Surfactants in Agrochemicals" 1995, Seite 155, die Verwendung von Kieselgelen als Zusätze zu Suspensionskonzentraten, um das Absetzen und Verklumpen zu vermeiden.

Bei Foy und Pritchard in "Pesticide Formulation and Adjuvant Technology", 1996, Seite 85, wird die Verwendung von Kieselgel als Füllstoff beschrieben.

Im Römpp, "Chemie Lexikon", 1995, Seite 2233, werden unter dem Stichwort "Kieselgele" ebenfalls nur die schon bekannten Eigenschaften und Anwendungen, u.a. als Thixotropiermittel beschrieben.

Eine Wirkungssteigerung oder eine Erweiterung des Wirkungsspektrums von zum Beispiel blattaktiven Herbiziden auf Unkräuter außerhalb des bekannten Anwendungsbereiches ist beim Zusatz der Kieselgele nicht beschrieben und war auch nicht zu erwarten.

Zur Verbesserung der Wirksamkeit von bekannten Pflanzenschutzmitteln wurden im Stand der Technik spezielle Zusätze oder spezielle für diesen Zweck entwickelte Beistoffe vorgeschlagen. In der Regel finden hier Mineralöle und pflanzliche Öle und deren Derivate, sowie spezielle Tenside, z.B. Polysaccharide, ethoxylierte Triglyceride, Ethylen- oder Propylenoxid-copolymeraddukte mit Ethylendiamin als zentraler Startereinheit, polyoxyethylierte Fettsäuren und deren Amide und ebenso ethoxylierte Alkyl-Arylalkohole, typischerweise mit 6 - 10 Ethyleneinheiten Anwendung.

Die benötigte Menge solcher Additive oder Bioaktivatoren schwankt zwischen 100 g/l Fertigpräparat bis hin zu 2 bis 3 1 pro ha, so beispielsweise bei den Mineral- und Pflanzenölen als Tankmischpartner der blattaktiven Herbizide.

Die Erweiterung des Wirkungsspektrums von zum Beispiel als Herbizide eingesetzten Wirkstoffen auf andere Unkräuter bei gleichzeitiger verbesserter Wirkung konnte mit keinem dieser Produkte erreicht werden.

Neuere Untersuchungen haben ergeben, daß der Einsatz von wässerigen Suspensionskonzentraten im Vergleich zu Emulsionen generell Vorteile bietet. So entfällt die Verwendung von toxikologisch und ökotoxikologisch bedenklichen Lösungsmitteln wie beispielsweise Isophoron, Cyclohexanon, Xylolen und Acetophenon.

Außerdem können die Wirkstoffe wesentlich höher konzentriert werden ( vergl. DE 43 29 974 ). Durch diese Vorteile werden beispielsweise Verpackungs-, Transport- und auch Lagerkosten erheblich reduziert.

Aufgabe der vorliegenden Erfindung war, den Wirkungsbereich und die Wirksamkeit bekannter Pflanzenschutzwirkstoffe zu verbessern und neue, wirksamere Pflanzenschutzmittel bereitzustellen.

Gelöst wurde diese Aufgabe überraschenderweise durch die Merkmale des Hauptanspruchs. Vorzugsweise Ausgestaltungen sind in den Unteransprüchen charakterisiert.

Neben den zu erwartenden Effekten bei der Thixotropierung von Suspensionen und bei Einsatz als Füllstoff bei Pulvern und Granulaten führte der gleichzeitige Einsatz der erfindungsgemäß ausgewählten anorganischen Adsorbentien, vorzugsweise der Einsatz von Kieselsäure, Aluminosilikaten und/oder Aluminiumoxiden in Verbindung mit speziellen Tensiden in Pulvern, Granulaten und wässrigen Suspensionskonzentraten blattaktiver bzw. systemischer Wirkstoffe zu einem nicht zu erwartenden Steigerungseffekt auf das Wirkungspotential sowie zu einer Erweiterung insbesondere des Unkraut-Applikationsspektrums im Vergleich zu konventionell formulierten Emulsionspräparaten und Suspensionskonzentraten.

Als Kieselsäure kann kolloidale Kieselsäure, im allgemeinen Kieselgel genannt, aber auch die sogenannte pyrogene Kieselsäure, im allgemeinen Aerosil genannt, eingesetzt werden. Auch Aluminiumoxid in all seinen Modifikationen und hydratisierten Formen und die Aluminosilikate, insbesondere Schichtsilicate zeigten in Verbindung mit den erfindungsgemäß ausgewählten speziellen Tensiden einen überraschenden, die Wirksamkeit steigernden Effekt und führten zu einer Erweiterung des Applikationsspektrums. Bevorzugt wird Kieselgel eingesetzt. Die erfindungsgemäß ausgewählten anorganischen Adsorbentien können in Anteilen von 0,5 bis 25,0 Gew.-%, vorzugsweise in Anteilen von 2,0 bis 15,0 Gew.-%, dem neuen, erfindungsgemäßen Pflanzenschutzmittel zugesetzt werden.

Die erfindungsgemäß einzusetzenden Tenside sind ausgewählt aus der Gruppe ethoxylierter $C_6$ bis $C_{20}$ Alkohole, vorzugsweise $C_8$ bis $C_{16}$ Alkohole, der Ethylen-Propylenoxid-Blockcopolymere, gegebenenfalls mit Ethylendiamin als Startereinheit, und der Alkylethersulfate sowie deren Kombinationen. Ebenso ist der Einsatz von ethoxyliertem Rizinusöl möglich. Vorzugsweise werden ethoxylierte Tridecanole mit 5 bis 13 Ethylenoxideinheiten, Natrium-, Kaliumoder Ammonium-Alkylethersulfate, insbesondere Natrium-, Kaliumoder Ammonium-fettalkohol-diglycolethersulfate oder Mischungen dieser Tenside eingesetzt. Besonders bevorzugt werden die an sich bekannten Tenside Volpo T/785, Volpo T/10, Genapol LRO, Emulsogen, Pluronic-Typen oder Mischungen dieser Tenside eingesetzt. Der Anteil an Tensid in den erfindungsgemäßen Pflanzenschutzmitteln beträgt 5,0 bis 40,0 Gew.-%, vorzugsweise 7 bis 35 Gew.-%, insbesondere bevorzugt zwischen 10,0 und 25 Gew.-%.

Die Summe der Anteile an erfindungsgemäß ausgewählten Adsorbentien und erfindungsgemäß ausgewählten Tensiden beträgt 5,5 bis 45,0 Gew.-%, vorzugsweise 15,0 bis 25,0 Gew.-%.

Als herbizide Wirkstoffe enthalten die neuen erfindungsgemäßen Pflanzenschutzmittel sowohl blattaktive als auch boden- und blattaktive Herbizide aus den Gruppen der Harnstoffderivate, der Carbamate, Biscarbamate,Diphenylether, Pyridolylessigsäurederivate, Pyridazine, Triazine, Triazinone, Uracile, Sulfonylharnstoffe,Benzofuranderivate sowie Glufosinate und Glyphosate, und deren Salze oder Ester, sowie Mischungen einiger ausgesuchter Wirkstoffe. Bevorzugt werden Phenmedipham (PMP). Desmedipham (DMP), Metamitron und/oder Ethofumesat eingesetzt. Als fungizide Wirkstoffe sind Morpholine, Azole, Phthalimide oder Piperidine, als Insektizide Pyrethroide, Carbamate oder Organophosphate, die möglichen Salze oder Ester sowie Mischungen von ausgewählten genannten Wirkstoffen geeignet. Der Anteil des Wirkstoffes in den erfindungsgemäßen Pflanzenschutzmitteln beträgt 5,0 bis 75,0 Gew.-%, vorzugsweise 15,0 bis 55,0 Gew.-%.

Neben diesen Bestandteilen kann das erfindungsgemäße Pflanzenschutzmittel noch an sich bekannte Hilfs- und/oder Trägerstoffe enthalten, die üblicherweise bei Suspensionskonzentraten eingesetzt werden. Beispielhaft genannt seien Frostschutzmittel, Stabilisatoren, Entschäumer und Netzund Dispergiermittel sowie gegebenenfalls weitere Füllstoffe. Verwiesen sei hierzu auch auf die DE 43 29 974. Das Netz- und Dispergiermittel kann beispielsweise ausgewählt sein aus den Gruppen der phosphatierten Di- oder Tristyrolphenol-ethoxylate in der Phosphatform und/ oder der Ligninsulfonate. Vorzugsweise werden ethoxylierte Tristyrolphenol-phosphate, Natrium-, Kalium-, Calcium-, Magnesium-, Zink- oder Ammonium-ligninsulfonate, insbesondere Ligninsulfonat-Calcium-Magnesium-Zink-Mischsalze, oder Mischungen dieser Mittel eingesetzt. Besonders bevorzugt sind Tensiofix LX Spezial, Soprophor FL, Soprophor FL 60 oder Mischungen dieser Mittel.

Hergestellt werden die erfindungsgemäßen Pflanzenschutzmittel nach an sich bekannten Verfahren, vorzugsweise des Naßzermahlungsprinzips. Dazu werden die einzelnen Komponenten ( Wirkstoffe und Hilfsstoffe ) mit einer entprechenden Menge Wasser in einer geeigneten Vorrichtung, zum Beispiel einer Perlmühle, fein vermahlen.

Vorzugsweise werden die Komponenten auf einen Feinheitsgrad von 0,5 bis 20 μm, insbesondere auf einen Feinheitsgrad von < 10 μm eingestellt. Im Falle von Festpräparationen ( Granulate oder Pulver ) werden ebenfalls Methoden entsprechend dem Stande der Technik angewendet.

Die erfindungsgemäßen Pflanzenschutzmittel zeigen in der Formulierungs-/ Erscheinungsform eines Suspensionskonzentrates neben den bekannten toxikologischen und ökotoxikologischen Vorteilen überaschenderweise ein zusätzlich gesteigertes biologisches Potential in der Bekämpfung von Unkräutern, die mit bekannten Präparationen in äquivalenter Aufwandmenge bisher nicht bekämpft werden konnten.

So bieten Mittel unter Verwendung der erfindungsgemäßen Adsorbentien / Tensidkombination erstmals die Möglichkeit, Pflanzenschutzmittel aus der Gruppe der Carbamate und Biscarbamate bei der Bekämpfung von Kamillearten, beispielsweise Matricaria chamomilla (MATCH) und Matricaria inodora (MATIN), einzusetzen. Bisher war es weder mit dem Wirkstoff Desmedipham, noch mit dem Wirkstoff Phenmedipham, noch mit einer 1:1 Mischung bzw. der Kombination der genannten Wirkstoffe mit Ethofumesat möglich, Kamillearten ausreichend zu bekämpfen ( vergl. nachfolgende Beispiele ). Diese ließen sich bisher nur beim Einsatz weiterer Herbizide (z.B. Metamitron) ausreichend bekämpfen.

Des weiteren konnte z.B. durch die Anwendung erfindungsgemäßer Pflanzenschutzmittel aus dem Bereich Triazinone, beispielsweise im Zuckerrübenanbau, Mitteleinsparungen von 10 bis 20 % bei gleicher Wirksamkeit realisiert werden, wie das folgende Beispiel zeigt.

Die Tabelle zeigt Boniturergebnisse aus einem Herbizidversuch in Zuckerrüben. Es wurde ein konventionelles Metamitron SC verglichen mit einem erfindungsgemäßen bei adäquater Aufwandmenge in l/ha, aber reduzierter Wirkstoffmenge pro ha.

( 6,5 l/ha x 700 g/l = 4550 g/ha zu 6,5 l/ha x 550 g/l =

3575 g/ha entsprechend -21,4 % )

Tabelle 1

| Präparat | 1/ha | CHEAL | VIOAR | POLSS | MATCH | GALAP | MEAN |
|---|---|---|---|---|---|---|---|
| Metamitron 700 g/l SC | 6,5 | 98 | 92 | 90 | 100 | 73 | 91 |
| erfindungsgem. Metamitron SC mit 550g/l | 6,5 | 100 | 88 | 96 | 100 | 80 | 93 |

Die Kombination von zwei blattaktiven Wirkstoffen, nämlich Phenmedipham mit Desmedipham, deren bekannte Wirkungsspektren sich auf breitblättrige Unkräuter ohne ausreichende Wirkung gegen Kamille beschränkt, zeigte bei identischer Aufwandmenge Wirkstoff pro ha im Vergleich zu einem aus dem Stand der Technik bekannten Emulsionskonzentrat deutlich verbesserte Wirksamkeit (vgl. Tabelle 5, obere Hälfte).

Auch beim Einsatz von nur einem blattaktiven Wirkstoff, nämlich Desmedipham, konnten bei identischer Aufwandmenge Wirkstoff pro ha im Vergleich zu einem aus dem Stand der Technik bekannten Emulsionskonzentrat deutlich verbesserte Wirksamkeiten festgestellt werden. (vgl. Tabelle 5, untere Hälfte).

Die folgenden Beispiele und Rezepturen sollen die Erfindung erläutern, ohne sie einzuschränken.

| Suspensionskonzentrat A : | |
|---|---|
| | g/l |
| Desmedipham | 160 |
| Phenmedipham | 160 |
| Soprophor FL 60 | 25 |
| Volpo T/7 85 | 100 |
| Genapol LRO | 30 |
| Tensiofix LX Spezial | 5 |
| Kieselgel SM 614 | 40 |
| Frostschutzmittel | 40 |
| Stabilisator | 1 |
| Entschäumer | 5 |
| Wasser | ad 1 l |

| Suspensionskonzentrat B : | |
|---|---|
| | g/l |
| Desmedipham | 35 |
| Phenmedipham | 100 |
| Ethofumesat | 200 |
| Pluronic | |
| Genapol LRO | 150 |
| Kieselgel SM 614 | 35 |
| Frostschutzmittel | 60 |
| Stabilisator | 0,5 |
| Entschäumer | 5 |
| Wasser | ad 1 l |

| Suspensionskonzentrat C : | |
|---|---|
| | g/l |
| Desmedipham | 320 |
| Soprophor F1 | 30 |
| Volpo T/7 85 | 135 |

(fortgesetzt)

| Suspensionskonzentrat C : | |
|---|---|
| | g/l |
| Genapol LRO Paste | 15 |
| Tensiofix LX Spezial | 3 |
| Kieselgel SM 514 | 37 |
| Frostschutzmittel | 45 |
| Stabilisator | 0,5 |
| Entschäumer | 5 |
| Wasser | ad 1 l |

| Suspensionskonzentrat D: | |
|---|---|
| | g/l |
| Phenmedipham | 320 |
| Sophophor FL 60 | 45 |
| Voplo T / 10 | 120 |
| Genapol LRO | 45 |
| Tensiofix LX Spezial | 5 |
| Kieselgel SM 614 | 45 |
| Frostschutz | 40 |
| Stabilisator | 1,0 |
| Entschäumer | 7 |
| Wasser | ad 1 l |

| Suspensionskonzentrat E: | |
|---|---|
| | g/l |
| Metamitron | 550 |
| Hoechst LFS | 35 |
| Genapol LRO | 40 |
| Volpo T10 | 120 |
| Kieselgel Tixosil 38A | 37 |
| Frostschutzmittel | 35 |
| Entschäumer | 5 |
| Stabilisatoren | 1 |
| Wasser | ad 1 l. |

Beispiel 1:

Korrelation von Wirkung (%) und Gehalt an Kieselgel (g/l) bei einer PMP/DMP Mischung:

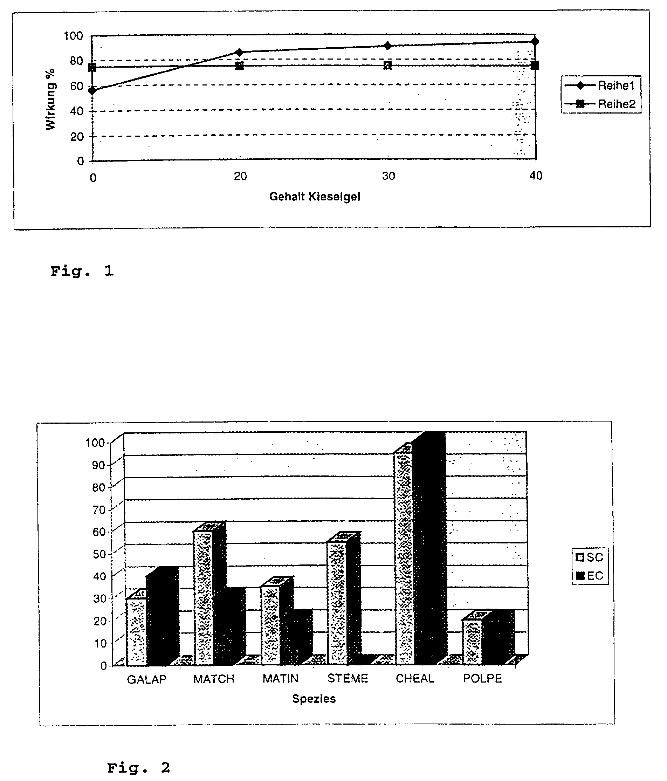

Die Auswirkung der Zugabe von Kieselgel auf das Wirkungspotential eines Pflanzenschutzmittels wird deutlich bei einem Vergleich einer Basisrezeptur ohne und mit unterschiedlichem Gehalt an Kieselgel. Verglichen wurde ein Phenmedipham/Desmedipham Suspensionskonzentrat (PMP/DMP) mit unterschiedlichem Kieselgel-Gehalt mit einem Phenmedipham/Desmedipham- Emulsionskonzentrat Betanal ® AM 11 EC der Firma Hoechst Schering AgrEvoGmbH (Betanal AM 11 enthält PMP/DMP im Verhältnis 1:1) ohne Kieselgel.
Die Ergebnisse sind in Tabelle 2 und Figur 1 dargestellt.

Tabelle 2

| | | | | |
|---|---|---|---|---|
| Korrelation von Wirkung ( % ) und Gehalt an Kieselgel ( g/l ) bei einer PMP / DMP Mischung bei gleicher Aufwandmenge an Wirkstoffen / ha | | | | |
| Kieselgelgehalt in einer erfindungsgemäßen Suspension .( Reihe1 ) | 0 | 20 | 30 | 40 |
| Wirkung % | 56,6 | 85,8 | 90,8 | 94,2 |
| *Betanal AM 11 EC ohne Kieselgel (Reihe 2) | 0 | 0 | 0 | 0 |
| Wirkung % | 75 | 75 | 75 | 75 |

Beispiel 2: Wirksamkeitsvergleich zweier Pflanzenschutzmittel

Verglichen wurde ein erfindungsgemäßes Pflanzenschutzmittel ( Suspensions-konzentrat C; SC C), das 320 g/l Desmedipham enthielt, mit einem im Stand der Technik bekannten Pflanzenschutzmittel ( Betanal® AM der Firma Hoecht Schering AgrEvo GmbH; Betanal AM enthält nur Desmedipham ; EC ), das 160 g/l Desmedipham enthielt. Von dem erfindungsgemäßen Suspensionskonzentrat ( SC C ) wurden
0,75 l/ha, von Betanal AM ( EC ) wurden 1,5 l/ha aufgewendet ( entsprechend äquivalenten Mengen/ha ).
Die Meßergebnisse sind in Tab. 3 und Fig. 2 dargestellt.

Tabelle 3

| Vergleich der Wirksamkeit einer erfindungsgemäßen Suspension zu *Betanal AM | | | | | | | |
|---|---|---|---|---|---|---|---|
| Typ | Wirksamkeit [%]/Spezies | | | | | | |
| | GALAP | MATCH | MATIN | STEME | CHEAL | POLPE | Durchschnitt |
| SC B | 30 | 60 | 35 | 55 | 95 | 20 | 49,2 |
| EC | 40 | 30 | 20 | 0 | 100 | 20 | 35 |
| GALAP: Galium aparine    MATCH: Matricaria chamonilla   MATIN: Matricaria inodora    STEME: Stellaria media   CHEAL: Chenopodiumalbum    POLPE: Polygorium persicara | | | | | | | |

Beispiel 3: Wirksamkeitsvergleich bei verschiedenen Aufwandmengen :

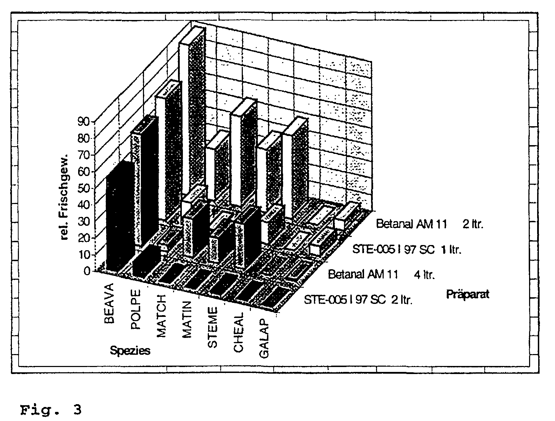

Die wesentlich verbesserte Wirkung der erfindungsgemäßen Pflanzenschutzmittel wird deutlich bei einem Vergleich der relativen Frischgewichte der Unkräuter. Verglichen wurde die erfindungsgemäße Suspension A ( SC A ) mit Betanal ® AM 11 der Firma AgrEvo, das DMP,PMP im Verhältnis 1:1 enthielt.
Frischgewicht ist definiert als die Masse der oberirdischen Pflanzenteile.
Relatives Frischgewicht ist definiert als die Masse der oberirdischen Pflanzenteile einer behandelten Probe im Verhältnis zur Masse einer unbehandelten Kontrollprobe (=100 %).
Die Ergebnisse sind in Tabelle 4 und Figur 3 dargestellt.

Tabelle 4

| Vergleich der relativen Frischgewichte bei 2 verschiedenen Aufwandmengen | | | | | | | | |
|---|---|---|---|---|---|---|---|---|
| Produkt | Aufwandmenge [l/ha] | BEAVA | POLPE | MATCH | MATIN | STEME | CHEAL | GALAP |
| Betanal AM 11 | 4 | 67 | 4 | 23 | 15 | 27 | 0 | 1 |
| SC A | 2 | 55 | 8 | 0 | 0 | 1 | 0 | 0 |
| | | | | | | | | |
| Betanal AM 11 | 2 | 90 | 31 | 54 | 38 | 50 | 0 | 6 |
| SC A | 1 | 73 | 14 | 1 | 2 | 13 | 0 | 6 |
| GALAP: Galium aparine    MATCH: Matricaria chamonilla   MATIN: Matricaria inodora    STEME: Stellaria media   CHEAL: Chenopodiumalbum    POLPE: Polygorium persicara   BEAVA: Beta vulgaris | | | | | | | | |

Beispiel 4 :

Beispiel 4 zeigt einen Wirksamkeitsvergleich von zugelassenen Emulsionskonzentraten (Betanal AM und Betanal AM 11) mit erfindungsgemäßem Suspenionskonzentrat mit einem Kieselgelanteil von 40 g/l bzw. 20 g/l bei unterschiedlichen Aufwandmengen.

Sowohl die integrale (6 Spezies) als auch die artenspezifische Wirksamkeit sind bei Verwendung erfindungsgemäßer Zusammensetzung wesentlich erhöht.

Tabelle 5

| Variante | Wirkstoffe (g/l) | Aufwandmenge (l/ha) | Wirkung % | | |
|---|---|---|---|---|---|
| | | | ø* 6 Spezies | Matin** | Match*** |
| Standard EC Betanal. ®AM11 | 80 + 80 DMP +PMP | 1 | 22,6 | 0 | 0 |
| | | 2 | 46,5 | 45 | 10 |
| | | 4 | 75 | 75 | 50 |
| erfindungsgemäße Suspension SC A (Code-Nr. 8102-005I97 mit 40 g/l Kieselgel) | 160 +160 DMP+PMP | 0,5 | 46,6 | 65 | 55 |
| | | 1 | 82,3 | 97 | 97 |
| | | 2 | 94,2 | 100 | 100 |
| Standard EC Betanal® AM | 160 DMP | 1 | 20 | 0 | 30 |
| | | 1,5 | 35 | 20 | 30 |
| | | 2 | 46,7 | 20 | 40 |
| erfindungsgem. Suspension SC - C (Code-Nr. 8101-006I97 mit 20 g/l Kieselgel) | 320 DMP | 0,5 | 35,8 | 20 | 60 |
| | | 0,75 | 49 | 35 | 60 |
| | | 1 | 62 | 75 | 70 |

* Galium aparine,Matricaria chamonilla, Matricaria inodore, Stellaria media, Chenopodiumalbum und Polygonum persicara

** Matricaria inodora

*** Matricaria chamomilla Betanal ® eingetragenes Warenzeichen der Firma Hoechst Schering AgrEvo GmbH

Beispiel 5 :

Vergleich von zugelassenen Emulsionskonzentraten mit erfindungsgemäßen Suspensionskonzentraten mit den Wirkstoffen Ethofumesat, Phenmedipham und Desmedipham bei einem Kieselgelanteil von 40 g/l.

Tabelle 6

| | l/ha | GALAP | MATCH | MATIN | STEME | CHEAL | POLPE |
|---|---|---|---|---|---|---|---|
| Betanal Progress mit | 1 | 75 | 90 | 99 | 75 | 99 | 80 |
| PMP 75; DMP 25 ; Etho 150 g/l | | | | | | | |
| erfindungsgem. SC mit | 0,75 | 75 | 95 | 100 | 88 | 100 | 90 |
| PMP 100; DMP 33; Etho 200 g/l | | | | | | | |

Die nachfolgende Tabelle 7 gibt die Art und Gruppenzugehörigkeit verwendeter Beistoffe an.

Tabelle 7

| Beistoff | Art | chem. Gruppe |
|---|---|---|
| Volpo T 7 85 und T 10 | Netzmitttel | Poly-ethoxylierte Alkohole |
| Genapol LRO | Netzmittel | Fettalkohol-diglycolether-sulfat Na-Salz |
| Tensiofix LX Spezial | Dispergiermittel | Ligninsulfonat |
| Soprophor FI und FI 60 | Dispergiermittel | ethoxyliertes Tristyrol-phenol-phosphat |
| Emulsogen | Netzmittel | ethoxyliertes Rizinusöl |
| Pluronic | Dispergiermittel | Ethoxylen-Propoxylen-Blockpolymerisat |
| Hoechst LFS | Dispergiermittel | Poly(arylalkyl)phenol-polyethylenglykolphosphorsäureester, Triethanolammoniumsalz) |

**Patentansprüche**

1. Pflanzenschutzmittel, formuliert als Pulver, Granulat oder als flüssige, wässrige Suspension, aus blattaktiven oder systemischen Wirkstoffen, **dadurch gekennzeichnet, daß** es

im Falle von Herbizidpräparaten mindestens ein Herbizid aus den Gruppen der Harnstoffderivate oder Sulfonylharnatoffe, der Carbamate, Biscarbamate, Diphenylether, Pyridolylessigsäurederivate, Pyridazine, Triazine, Triazinone, Urazile, Benzofuranderivate, Glyphosphate oder Glufosinate,

im Fall von Fungizidpräparaten mindestens ein Fungizid aus der Gruppe der Morpholine, Azole, Phthalimide oder Piperidine,

im Fall von Insektizidpräparaten mindestens ein Insektizid aus der Gruppe der Pyrethroide, Carbamate oder Organophosphate,

oder mögliche Salze oder Ester der vorgenannten Wirkstoffgruppen,

mindestens ein anorganisches Adsorbens und mindestens ein Tensid aus der Gruppe der ethoxylierten $C_6$ bis $C_{20}$-Alkohole, vorzugsweise $C_8$- bis $C_{16}$-Alkohole, der ethoxylierten Rizinusöle oder der Alkylethersulfate enthält, wobei die Summe der Anteile des Adsorbens/der Adsorbentien und des Tensids/der Tenside 5,5 bis 45,0 Gew.-% beträgt, vorzugsweise 15,0 bis 25,0 Gew.-%, und

wobei die Kombination aus Metamitron technisch (I), Ethofumesat technisch (II), Phenmedipham technisch (III), Alkylarylsulfonat (IV), Polyoxyethylen-(6)-tridecylether (V), hochdisperse Fällungskieselsäure (VI) und Kaolin W (VII) in den Zusammensetzungen:

| I [Gew.-%] | II [Gew.-%] | III [Gew.-%] | IV [Gew.-%] | V [Gew.-%] | VI [Gew.-%] | VII [Gew.-%] |
|---|---|---|---|---|---|---|
| 50,0 | 6,60 | 6,80 | 20,0 | 0,0 | 5,0 | 11,6 |
| 50,0 | 6,60 | 6,80 | 20,0 | 5,0 | 7,5 | ca. 4,10 |
| 45,0 | 5,94 | 6,12 | 20,0 | 7,5 | 7,5 | ca. 7,94 |
| 45,0 | 5,94 | 6,12 | 20,0 | 10,0 | 10,0 | ca. 2,94 |
| 50,0 | 6,60 | 6,80 | 20,0 | 7,0 | 7,0 | ca. 2,60 |
| 50,0 | 6,60 | 6,80 | 20,0 | 7,0 | ca. 9,6 | 0,0 |
| 23,3 | 6,30 | 6,50 | 15,0 | 5,0 | 5,0 | 38,9 |

und die Kombination aus 33,93 Gew.-% Propachlor (94 %), 11,31 Gew.-% Atrazin (95 %), 4,00 Gew.-% Hi-Sil 233®, 1,00 Gew.-% Kaolin, 2,80 Gew.-% Pluronic 105®, 1,00 Gew.-% Igepon T77®, 1,00 Gew.-% CaCl$_2$x2H$_2$O, 8,00 Gew.-% Ethylenglykol, 0,10 Gew.-% Corak 100® und 36,86 Gew.-% Wasser ausgeschlossen ist.

2. Pflanzenschutzmittel gemäß Anspruch 1, **dadurch gekennzeichnet, daß** das anorganische Adsorbens ausgewählt ist aus den Kieselsäuren, den Aluminosilikaten und/oder den Aluminiumoxiden.

**3.** Pflanzenschutzmittel gemäß einem der Ansprüche 1 oder 2, **dadurch gekennzeichnet, daß** das anorganische Adsorbens kolloidale Kieselsäure (Kieselgel) und/oder pyrogene Kieselsäure (Aerosil) ist.

**4.** Pflanzenschutzmittel gemäß einem der Ansprüche 1 bis 3, **dadurch gekennzeichnet, daß** das Tensid ausgewählt ist aus den ethoxylierten Tridecanolen mit 5 bis 13 Ethoxyeinheiten, aus den Natrium-, Kalium- oder Ammonium-fettalkohol-dialkyl-glycolethersulfaten, aus ethoxyliertem Rizinusöl oder aus Mischungen dieser Tenside.

**5.** Pflanzenschutzmittel gemäß einem der Ansprüche 1 bis 4, **dadurch gekennzeichnet, daß** das Tensid ausgewählt ist aus Volpo T/785, Volpo T/10, Emulsogen oder Genapol LRO oder aus Mischungen dieser Tenside.

**6.** Pflanzenschutzmittel gemäß einem der Ansprüche 1 bis 5, **dadurch gekennzeichnet, daß** im Falle der herbiziden Präparate der Wirkstoff ausgewählt ist aus Phenmedipham, Desmedipham, Metamitron oder Ethofumesat oder aus Mischungen dieser Wirkstoffe.

**7.** Pflanzenschutzmittel gemäß einem der Ansprüche 1 bis 6, **dadurch gekennzeichnet, daß** es zusätzlich übliche Hilfs- und/oder Trägerstoffe, beispielsweise Frostschutzmittel, Entschäumer und/oder Netz- und Dispergiermittel sowie Trägerstoffe in üblichen Anteilen enthält.

**8.** Pflanzenschutzmittel gemäß einem der Ansprüche 1 bis 7, **dadurch gekennzeichnet, daß** das Netz- und Dispergiermittel ausgewählt ist aus den phosphatierten Di- oder Tristyrolen und Ligninsulfonaten, vorzugsweise aus den ethoxylierten Tristyrol-phenol-phosphaten, oder den Natrium-, Kalium-, Calzium-, Magnesium-, Zink- oder Ammonium-Ligninsulfonaten, insbesondere aus den Ligninsulfonat-Calzium/Magnesium/Zink-Mischsalzen oder Mischungen dieser Mittel.

**9.** Pflanzenschutzmittel gemäß einem der Ansprüche 1 bis 8, **dadurch gekennzeichnet, daß** das Netz- und Dispergiermittel ausgewählt ist aus Tensiofix LX Spezial, Soprophor FL, Soprophor FL 60, Hoechst LFS oder Mischungen dieser Mittel.

**10.** Pflanzenschutzmittel gemäß einem der Ansprüche 1 bis 9, **dadurch gekennzeichnet, daß** der Anteil an anorganischem Adsorbens 0,5 bis 25,0 Gew.-%, vorzugsweise 2,0 bis 15,0 Gew.-% , der Anteil an Tensiden 5,0 bis 40,0 Gew.-%, vorzugsweise 7 bis 35 Gew.-%, insbesondere bevorzugt zwischen 10,0 und 25 Gew.-%, und der Anteil an Wirkstoff(en) 5,0 bis 75,0 Gew.-%, vorzugsweise 15,0 bis 55,0 Gew.-%, beträgt.

**11.** Pflanzenschutzmittel gemäß einem der Ansprüche 1 bis 10, **dadurch gekennzeichnet, daß** das Kieselgel einen $SiO_2$-Gehalt von mindestens 95 % und eine spezifische Oberfläche von 100 bis 700 $m^2$/g, vorzugsweise von 130 bis 250 $m^2$/g, aufweist.

**12.** Verfahren zur Herstellung eines Pflanzenschutzmittels gemäß einem der Ansprüche 1 bis 11, **dadurch gekennzeichnet, daß** die Komponenten in einer geeigneten Vorrichtung fein gemahlen und mit der erforderlichen Menge an Tensiden und Adsorbens vermischt werden.

**13.** Verfahren zur Herstellung eines Pflanzenschutzmittels gemäß Anspruch 12, **dadurch gekennzeichnet, daß** die Komponenten auf einen Feinheitsgrad von 0,5 bis 20 μm, vorzugsweise < 10 μm, eingestellt werden.

**Claims**

**1.** Crop protection composition, formulated as powder, granules or as a liquid, aqueous suspension, of active compounds having foliar or systemic action, **characterized in that** it comprises,

in the case of herbicide preparations, at least one herbicide from the groups of the urea derivatives or sulphonylureas, the carbamates, biscarbamates, diphenyl ethers, pyridolylacetic acid derivatives, pyridazines, triazines, triazinones, uracils, benzofuran derivatives, glyphosate or glufosinate,

in the case of fungicide preparations, at least one fungicide from the group of the morpholines, azoles, phthalimides or piperidines,

in the case of insecticide preparations, at least one insecticide from the group of the pyrethroids, carbamates or organophosphates,

or possible salts or esters of the abovementioned groups of active compounds,

at least one inorganic adsorbent and at least one surfactant from the group of the ethoxylated $C_6$- to $C_{20}$-alcohols, preferably $C_8$- to $C_{16}$-alcohols, the ethoxylated castor oils or the alkyl ether sulphates, wherein the sum of the proportions of adsorbent(s) and surfactant(s) is from 5.5 to 45.0% by weight, preferably from 15.0 to 25.0% by weight, and

the combination of metamitron technical (I), ethofumesate technical (II), phenmedipham technical (III), alcylaryl sulfonate (IV), polyoxyethylene-(6)-tridecyl ether (V), highly disperse pricipitated silicic acid (VI) and kaoline W (VII) in the composition:

| I [%-wt.] | II [%-wt.] | III [%-wt.] | IV [%-wt.] | V [%-wt.] | VI [%-wt.] | VII [%-wt.] |
|---|---|---|---|---|---|---|
| 50,0 | 6,60 | 6,80 | 20,0 | 0,0 | 5,0 | 11,6 |
| 50,0 | 6,60 | 6,80 | 20,0 | 5,0 | 7,5 | ca. 4,10 |
| 45,0 | 5,94 | 6,12 | 20,0 | 7,5 | 7,5 | ca. 7,94 |
| 45,0 | 5,94 | 6,12 | 20,0 | 10,0 | 10,0 | ca. 2,94 |
| 50,0 | 6,60 | 6,80 | 20,0 | 7,0 | 7,0 | ca. 2,60 |
| 50,0 | 6,60 | 6,80 | 20,0 | 7,0 | ca. 9,6 | 0,0 |
| 23,3 | 6,30 | 6,50 | 15,0 | 5,0 | 5,0 | 38,9 |

and the combination of 33,93% by weight of propachlor (94%), 11,31% by weight of atrazine (95%), 4,00% by weight of Hi-Sil 233®, 1,00% by weight of kaoline, 2,80% by weight of Pluronic 105®, 1,00% by weight of Igepon T77®, 1,00% by weight of $CaCl_2$ x 2 $H_2O$, 8,00% by weight of ethylene glycol, 0,10% by weight of Corak 100® and 36,86% by weight of water being excluded.

2. Crop protection composition according to Claim 1, **characterized in that** the inorganic adsorbent is selected from the silicic acids, the alumosilicates and/or the aluminium oxides.

3. Crop protection composition according to any of Claims 1 or 2, **characterized in that** the inorganic adsorbent is colloidal silicic acid (silica gel) and/or pyrogenic silicic acid (Aerosil).

4. Crop protection composition according to any of Claims 1 to 3, **characterized in that** the surfactant is selected from the ethoxylated tridecanols having from 5 to 13 ethoxy units, from the sodium, potassium or ammonium fatty alcohol dialkylglycol ether sulphates, from ethoxylated castor oil or from mixtures of these surfactants.

5. Crop protection composition according to any of Claims 1 to 4, **characterized in that** the surfactant is selected from Volpo T/785, Volpo T/10, Emulsogen or Genapol LRO, or from mixtures of these surfactants.

6. Crop protection composition according to any of Claims 1 to 5, **characterized in that**, in the case of the herbicidal preparations, the active compound is selected from phenmedipham, desmedipham, metamitron or ethofumesate, or of mixtures of these active compounds.

7. Crop protection composition according to any of Claims 1 to 6, **characterized in that** it additionally comprises customary auxiliaries and/or carriers, for example antifreeze agents, antifoams and/or wetting agents and dispersants and also carriers, in customary proportions.

8. Crop protection composition according to any of Claims 1 to 7, **characterized in that** the wetting agent and dispersant are selected from the phosphated di- or tristyrenes and lignin sulphonates, preferably from the ethoxylated trisstyrenephenol phosphates, or the sodium, potassium, calcium, magnesium, zinc or ammonium lignin sulphonates, in particular from the mixed calcium/magnesium/zinc lignin sulphonate salts, or mixtures of these agents.

9. Crop protection composition according to any of Claims 1 to 8, **characterized in that** the wetting agent and dispersant are selected from Tensiofix LX Special, Soprophor FL, Soprophor FL 60, Hoechst LFS or mixtures of these agents.

10. Crop protection composition according to any of Claims 1 to 9, **characterized in that** the proportion of inorganic adsorbent is from 0.5 to 25.0% by weight, preferably from 2.0 to 15.0% by weight, the proportion of surfactants is from 5.0 to 40.0% by weight, preferably from 7 to 35% by weight, particularly preferably between 10.0 and 25% by weight, and the proportion of active compound(s) is from 5.0 to 75.0% by weight, preferably from 15.0 to 55.0% by weight.

11. Crop protection composition according to any of Claims 1 to 10, **characterized in that** the silica gel has an $SiO_2$ content of at least 95% and a specific surface area of from 100 to 700 $m^2/g$, preferably of from 130 to 250 $m^2/g$.

12. Process for preparing a crop protection composition according to any of Claims 1 to 11, **characterized in that** the components are finely ground in a suitable apparatus and mixed with the required amount of surfactants and adsorbent.

13. Process for preparing a crop protection composition according to Claim 12, **characterized in that** the components are adjusted to a degree of fineness of from 0.5 to 20 μm, preferably < 10 μm.

**Revendications**

1. Produit phytosanitaire, formulé sous forme de poudre, de granulat ou de suspension aqueuse liquide, de substances actives agissant via les feuilles ou systémiques, **caractérisé en ce qu'**il contient

   dans le cas de préparations d'herbicides, au moins un herbicide des groupes des dérivés de l'urée ou des sulfonylurées, des carbamates, des biscarbamates, de diphényléthers, des dérivés de l'acide pyridolylacétique, des pyridazines, de triazines, des triazinones, des uraciles, des dérivés benzofuranniques, des glyphosphates et des glufosinates,
   dans le cas des préparations de fongicides, au moins un fongicide du groupe des morpholines, des azoles, des phtalimides ou des pipéridines,
   dans le cas de préparations d'insecticides, au moins un insecticide du groupe des pyréthroïdes, des carbamates ou des organophosphates,
   ou des sels ou des esters éventuels des groupes de substances actives susmentionnées,
   au moins un adsorbant inorganique et au moins un agent tensioactif du groupe des alcools éthoxylés en $C_6$ à $C_{20}$, de préférence des alcools éthoxylés en $C_8$ à $C_{16}$, des huiles de ricin éthoxylées ou des éthersulfates d'alkyle, la somme des proportions de l'adsorbant/des adsorbants et de l'agent tensioactif/des agents tensioactifs étant de 5,5 à 45,0 % en poids, de préférence de 15,0 à 25,0 % en poids et
   la combinaison de Metamitron de qualité technique (I), d'Ethofumesat de qualité technique (II) de Phenmedipham de qualité technique (III), d'alkylarylsulfonate (IV), de polyoxyéthyléne-(6)-tridécyléther (V), de silice précipitée hautement dispersée (VI) et de kaolin W (VII) dans les compositions :

| I [%en poids] | II [%en poids] | III [% en poids] | IV [% en poids] | V [% en poids] | VI [% en poids] | VII [% en poids] |
|---|---|---|---|---|---|---|
| 50,0 | 6,60 | 6,80 | 20,0 | 0,0 | 5,0 | 11,6 |
| 50,0 | 6,60 | 6,80 | 20,0 | 5,0 | 7,5 | env. 4,10 |
| 45,0 | 5,94 | 6,12 | 20,0 | 7,5 | 7,5 | env. 7,94 |
| 45,0 | 5,94 | 6,12 | 20,0 | 10,0 | 10,0 | env. 2,94 |
| 50,0 | 6,60 | 6,80 | 20,0 | 7,0 | 7,0 | env. 2,60 |
| 50,0 | 6,60 | 6,80 | 20,0 | 7,0 | env. 9,6 | 0,0 |
| 23,3 | 6,30 | 6,50 | 15,0 | 5,0 | 5,0 | 38,9 |

   et la combinaison de 33,93 % en poids de Propachlor (94 %), 11,31 % en poids d'Atrazin (95 %), 4,00 % en poids de Hi-Sil 233®, 1,00 % en poids de kaolin, 2,80 % en poids de Pluronic 105®, 1,00 % en poids d'Igepon T77®, 1,00 % en poids de $CaCl_2$ x $2H_2O$, 8,00 % en poids d'éthylèneglycol, 0,10 % en poids de Corak 100® et 36,86 % en poids d'eau étant exclues.

**2.** Produit phytosanitaire selon la revendication 1, **caractérisé en ce que** l'adsorbant inorganique est choisi parmi les silices, les aluminosilicates et/ou les oxydes d'aluminium.

**3.** Produit phytosanitaire selon l'une quelconque des revendications 1 ou 2, **caractérisé en ce que** l'adsorbant inorganique est une silice colloïdale (gel silicique) et/ou une silice pyrogène (Aérosil).

**4.** Produit phytosanitaire selon l'une quelconque des revendications 1 à 3, **caractérisé en ce que** l'agent tensioactif est choisi parmi les tridécanols éthoxylés comprenant 5 à 13 unités éthoxy, les dialkylglycoléthersulfates d'alcool gras de sodium, de potassium ou d'ammonium, l'huile de ricin éthoxylée ou des mélanges de ces agents tensioactifs.

**5.** Produit phytosanitaire selon l'une quelconque des revendications 1 à 4, **caractérisé en ce que** l'agent tensioactif est choisi parmi le Volpo T/785, le Volpo T/10, l'Emulsogen ou le Genapol LRO ou des mélanges de ces agents tensioactifs.

**6.** Produit phytosanitaire selon l'une quelconque des revendications 1 à 5, **caractérisé en ce que** dans le cas de préparations d'herbicides, la substance active est choisie parmi le Phenmedipham, le Desmedipham, le Metamitron ou l'Ethofumesate ou des mélanges de ces substances actives.

**7.** Produit phytosanitaire selon l'une quelconque des revendications 1 à 6, **caractérisé en ce qu'**il contient en outre des adjuvants et/ou des substances de support usuels, par exemple des agents de protection contre le gel, des anti-mousses et/ou des mouillants et des dispersants ainsi que des substances de support en des proportions usuelles.

**8.** Produit phytosanitaire selon l'une quelconque des revendications 1 à 7, **caractérisé en ce que** le mouillant et le dispersant est choisi parmi les distyrènes ou les tristyrènes phosphatés et les ligninesulfonates, de préférence les tristyrène-phénol-phosphates éthoxylés ou les ligninesulfonates de sodium, de potassium, de calcium, de magnésium, de zinc ou d'ammonium, en particulier les sels mixtes de ligninesulfonate de calcium, de magnésium, de zinc ou des mélanges de ces agents.

**9.** Produit phytosanitaire selon l'une quelconque des revendications 1 à 8, **caractérisé en ce que** le mouillant ou le dispersant est choisi parmi le Tensiofix LX Spezial, le Soprophor FL, le Soprophor FL 60, le Hoechst LFS ou des mélanges de ces agents.

**10.** Produit phytosanitaire selon l'une quelconque des revendications 1 à 9, **caractérisé en ce que** la proportion d'adsorbant inorganique est de 0,5 à 25,0 % en poids, de préférence de 2,0 à 15,0 % en poids, la proportion d'agents tensioactifs est de 5,0 à 40,0 % en poids, de préférence de 7 à 35 % en poids, de manière particulièrement préférée entre 10,0 et 25 % en poids et la proportion de substance(s) active(s) de 5,0 à 75,0 % en poids, de préférence de 15,0 à 55,0 % en poids.

**11.** Produit phytosanitaire selon l'une quelconque des revendications 1 à 10, **caractérisé en ce que** le gel silicique présente une teneur en $SiO_2$ d'au moins 95 % et une surface spécifique de 100 à 700 $m^2$/g, de préférence de 130 à 250 $m^2$/g.

**12.** Procédé de préparation d'un produit phytosanitaire selon l'une quelconque des revendications 1 à 11, **caractérisé en ce que** les composants sont broyés finement dans un dispositif approprié et qu'ils sont mélangés avec la quantité nécessaire d'agents tensioactifs et d'adsorbant.

**13.** Procédé de préparation d'un produit phytosanitaire selon la revendication 12, **caractérisé en ce que** les composants sont réglés à un degré de finesse de 0,2 à 20 µm, de préférence à < 10 µm.

Fig. 1

Fig. 2

Fig. 3